# EUROPEAN PATENT SPECIFICATION

(11) **EP 1 009 184 B1**
(45) Date of publication and mention of the grant of the patent: **29.09.2004**
(21) Application number: 99124476.5
(22) Date of filing: 08.12.1999
(51) Int. Cl.: H04Q 7/38, H04L 12/56

(54) **Method for realizing contention resolution in mobile communication system**
Verfahren zur Konkurrenzbetriebsauflösung in einem mobilen Übertragungssystem
Procédé de résolution des conflits d'accés dans un système de communication mobile

(30) Priority: 09.12.1998 KR 9853993
(43) Date of publication of application: 14.06.2000
(73) Proprietor: LG ELECTRONICS INC., Seoul (KR)
(72) Inventor: Hwang, In Tae, Pundang-gu, Songnam-shi, Kyonggi-do (KR); Shin, Sang Rim, Tongan-gu, Anyang-shi, Kyonggi-do (KR); Ok, Myoung Jin, Seoul (KR)
(74) Representative: von Samson-Himmelstjerna, Friedrich R., Dipl.-Phys.

(56) References cited:
- WO-A-98/49857
- US-A- 5 517 681

## Description

### BACKGROUND OF THE INVENTION

### Field of the invention

The present invention relates to a random access in a mobile communication system and, more particularly, to a method for generating mobile IDs in a mobile communication system and the use of a mobile station for such a method.

### Discussion of related art

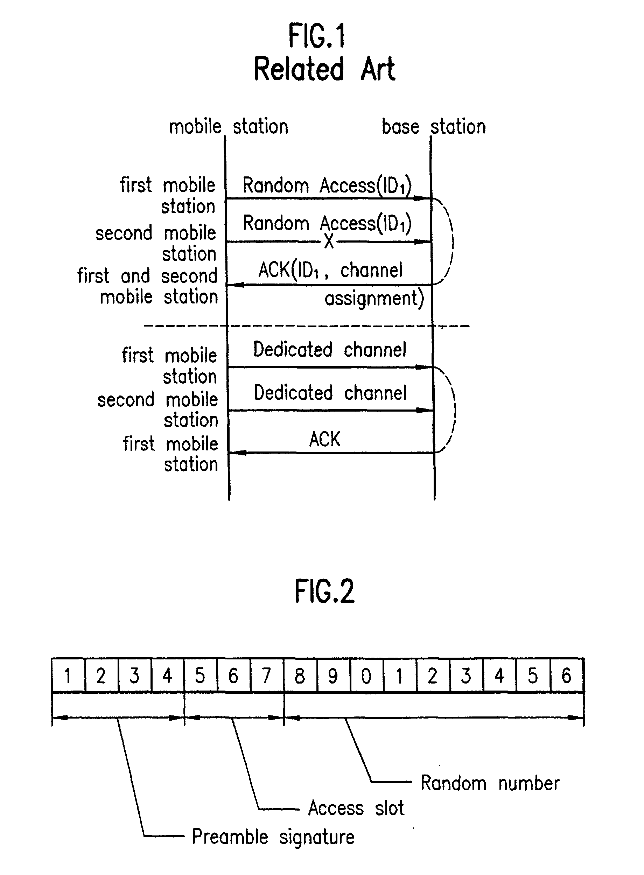

Usually a contention is not the collision of "physical parameters", such as access slot, preamble signature and spreading code but the collision of the mobile IDs of mobile stations. In a mobile communication system, mobile stations are distinguished from one another according to physical parameters. For example, the contention, i.e. a synchronisation of mobile IDs of different mobile stations, occurs when the mobile stations use the same access slot. A conventional method for realizing contention resolution in a mobile communication system is explained below with reference to the attached drawing. Fig. 1 is a flow chart showing this conventional method for realizing contention resolution in the mobile communication system.

Referring to Fig. 1, a first mobile station sends a random access signal to a base station including a first random mobile ID through a common channel in order to request multi-service. A second mobile station sends a random access signal to the base station including the first random mobile ID used by the first mobile station through a random access channel, having a predetermined time difference from the random access of the first mobile station. The first and second random mobile IDs of the first and second mobile stations may collide whether or not the physical parameters of preamble signature and access slot are identical or different to/from each other.

Then the base station performs the following operation according to the random access requests of the first and second mobile stations. When the first random mobile IDs of the random access signals from the first and second mobile stations collide with each other so that the base station cannot receive any signal, the base station transmits no signal to the first and second mobile stations. Then, the mobile stations repeat the random access after the lapse of a predetermined time of their inner timers. When the base station received a signal according to the random access of the first random mobile ID from the first mobile station but did not receive a signal according to the random access of the first random mobile ID from the second mobile station, it broadcasts an access grant signal ACK of the first random mobile ID, informing that it received the random access from the first mobile station. Accordingly, dedicated channels are assigned to the first and second mobile stations according to the access grant signal ACK of the first random mobile ID, which is broadcasted by the base station, resulting in generation of contention.

Specifically, because the second mobile station received the access grant signal ACK from the base station using the first random mobile ID which was random-accessed by itself although the random access of the first random mobile ID was not received by the base station, the second mobile station misrecognizes that its random access is successful. Thus, the dedicated channel contained in the acknowledge signal ACK of the first random mobile ID is assigned to the second mobile station. Accordingly, the first and second mobile stations transmit signals including directory numbers, which are their identities, through the dedicated channels assigned thereto.

Then, the base station searches the directory numbers included in the signals received through the dedicated channels from the first and second mobile stations, duplicates a signal including the directory number of the first mobile station to the first mobile station having the mobile ID, which succeeded in the random access, and then broadcasts it. The first mobile station compares the signal including its directory number, which has been broadcasted by the base station, with the signal which has been transmitted by itself, and continuously performs communication because the two signals are identical to each other. The second mobile station compares the signal ACK including its directory number, which has been transmitted from the base station, with the signal which has transmitted by itself. Then, the second mobile station tries random access again or stops it after the lapse of a predetermined time of its inner timer because the two signals are different from each other. By doing so, resolution of the contention generated between the first and second mobile stations is realized.

The base station makes resolution of the contention generated between the first and second mobile stations through the aforementioned procedure when it received the signal according to the random access of the first random mobile ID from the second mobile station but did not receive the signal according to the random access of the first random mobile ID from the first mobile station.

Further, a random access method in a mobile communication system comprising a plurality of mobile stations and at least one base station serving these mobile stations is also disclosed in US 5,517,681. In order to avoid the collision problem, which is caused when mobile stations use the same random identifier in their random access requests, the base station transmits an invoking message to the mobile stations in a first time slot to grant the mobile stations the right to send a random access message to the base station. The respective mobile station transmits a random access message containing a specific random identifier, i.e. a random number similar as in the example of Fig. 1, to the base station in a second time slot subsequent to the first time slot. Then, the base station transmits a response message containing the random number and further containing the identifier of the second time slot, which identifier is the consecutive number of the second time slot calculated from the time slot following the invoking message.

WO-A-98 49857 also describes a random access method in a mobile telecommunication system. The method uses, for example, an S-ALOHA random access scheme, in which scheme a mobile station generates and transmits a random access data packet to the base station. The data packet comprises a preamble and a data field portion. The preamble includes a signature code spread with a first spreading code, wherein said first spreading code is associated with a predetermined sector. Further, the data field of the random access data packet includes certain random access information including mobile (user) identity information in the form of different random numbers (similar as in the example of Fig. 1), in order to avoid message collisions.

However, in order to realize contention resolution the conventional methods for providing a random access in a mobile communication system unnecessarily consume electric power of the mobile and/or base stations and deteriorate the performance of the communication system.

Thus, there is a continuing need for an alternative way to provide random access in a mobile communication system that obviates one or more of the problems due to the above limitations and disadvantages of the prior art.

### SUMMARY OF THE INVENTION

According to the present invention, there is provided a method for generating mobile IDs in a mobile communication system, in which a plurality of mobile stations respectively generate different mobile IDs to provide random access to a base station, wherein the method comprises the steps of: the mobile stations generate different mobile IDs using at least two physical parameters including one of different preamble signatures; the mobile stations send a random access signal using the generated mobile IDs to the base station; and the mobile stations receive access grant signals from the base station.

According to another aspect of the present invention, there is provided a use of a mobile station in such a method for generating a mobile ID in a mobile communication system.

According to an embodiment of the present invention, each mobile ID comprises a preamble signature region, an access slot region, and a random number region.

According to a further embodiment, the preamble signature region, access slot region, and random number region are 4-bit, 3-bit and 9-bit, respectively.

According to a further embodiment, the mobile ID includes one of a plurality of access slots.

According to a further embodiment, the base station uses the mobile ID of the random access signal and then transmits an access grant signal to the mobile station wherein the mobile ID is included in the access grant signal.

According to a further embodiment the present invention, a plurality of mobile stations construct different mobile identities of physical parameters of different preamble signature regions and access slot regions, to try random access, thereby preventing unnecessary power consumption, deterioration of the performance of the system and interference due to the contention resolution.

It is to be understood that both the foregoing general description and the following detailed description are exemplary and explanatory and are intended to provide further explanation of the invention as claimed.

### BRIEF DESCRIPTION OF THE ATTACHED DRAWINGS

The accompanying drawings, which are included to provide a further understanding of the invention and are incorporated in and constitute a part of this specification, illustrate embodiments of the invention and together with the description serve to explain the principles of the invention:

In the drawings:
Fig. 1 is a flow chart showing a conventional method for realising contention resolution in a mobile communication system;
Fig. 2 shows an example of a format of a mobile identity (ID) applied to a method for random access in a mobile communication system according to the present invention; and
Fig. 3 is a flow chart showing a method for random access in a mobile communication system according to the present invention.

### DETAILED DESCRIPTION OF PREFERRED EMBODIMENTS

Reference will now be made in detail to the preferred embodiments of the present invention, examples of which are illustrated in the accompanying drawings.

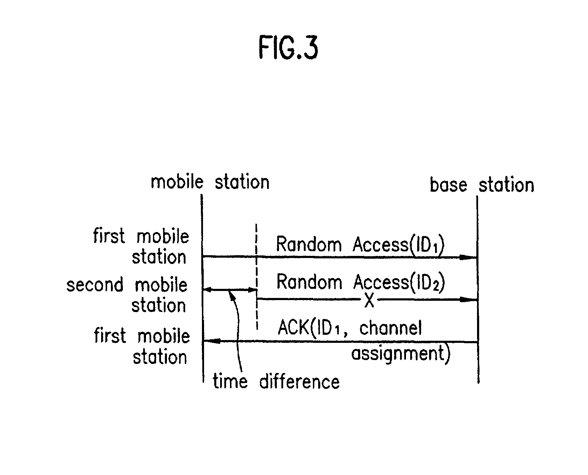

Fig. 2 shows an example of a format of a mobile identity (ID) applied to a method for random access in a mobile communication system according to the present invention. Referring to Fig. 2, the mobile identity consists of a preamble signature in a 4-bit preamble signature region, an access slot in a 3-bit access slot region and a random number in a random number region. Fig. 3 is a flow chart showing a method for random access in a mobile communication system according to the present invention. There is described below the method for random access in a mobile communication system according to the present invention with the reference to the attached drawings.

In case that first and second mobile stations try random access to a base station, they assign mobile IDs different from each other to provide random access in order to prevent contention. Specifically, radio resource controls (RRCs) of the first and second mobile stations randomly generate numbers of the physical parameters in the preamble signature region and access slot region and in the random number region, to assign different mobile IDs, and then attempt random access using the generated mobile IDs. The preamble signature region, access slot region and random number region are 4-bit, 3-bit and 9-bit, respectively.

The mobile ID is divided into several sections, and each bit of the sections is determined by using the physical parameters. The number of bits can vary; and the mobile ID of each mobile station can be varied when the physical parameters are changed. For example, the RRC of the first mobile station randomly generates numbers of the physical parameters in the "0110" preamble signature region and "110" access slot region and the random number region, to assign a first mobile ID (ID1), and then sends a random access signal to the base station. The RRC of the second mobile station randomly generates numbers in the physical parameters of the "1110" preamble signature region and "010" access slot region and the random number region, to assign a second mobile ID (ID2), and then sends a random access signal to the base station.

Then, the base station searches a reception state of the random access signals received from the first and second mobile stations, to detect a mobile ID of each received random access signal, and then transmits access grant signals ACK to the mobile station having the mobile ID. That is, when only the random access signal of the first mobile ID (ID1) from the first mobile station is received, the base station broadcasts the access grant signals ACK to the first mobile station including the first mobile ID (ID1). Accordingly, the first mobile station searches the access grant signals ACK, which are broadcast from the base station, to receive the access grant signal ACK of its first mobile ID, and then performs communication through a dedicated channel which is assigned by the base station to be contained in the access grant signal ACK. The second mobile station attempts at random access again using another mobile ID or stops it after the lapse of a predetermined time of its inner timer because it did not receive the access grant signal ACK of its second mobile ID from the base station.

In case that the base station has received only the random access signal of the second mobile station, it broadcasts access grant signals ACK to the second mobile station having the second mobile ID (ID2). Accordingly, the second mobile station searches the access grant signals ACK, which are broadcasted from the base station, to receive the access grant signal ACK of its second mobile ID, and then performs communication through a dedicated channel which is assigned by the base station to be contained in the access grant signal ACK. The first mobile station attempts at random access again using another mobile ID or stops it after the lapse of a predetermined time of its inner timer because it did not receive the access grant signal ACK of its first mobile ID from the base station.

According to the method for realizing contention resolution in a mobile communication system of the present invention, a plurality of mobile stations construct different mobile identities using physical parameters of different preamble signal regions and access slot regions, to attempt at random access, thereby preventing unnecessary power consumption, deterioration of the performance of the system and interference due to the contention resolution.

It will be apparent to those skilled in the art that various modifications and variations can be made in the method for random access in a mobile communication system of the present invention without departing from the scope of the invention. Thus, it is intended that the present invention covers modifications and variations of this invention provided they come within the scope of the appended claims.

## Claims

1. A method for random access in a mobile communication system, in which a plurality of mobile stations respectively generate different mobile IDs to provide random access to a base station,
**characterized in that** the method comprises the steps of:
the mobile stations generating different mobile IDs (ID1; ID2) using at least two physical parameters including one of different preamble signatures;
the mobile stations sending a random access signal using the generated mobile IDs (ID1; ID2) to the base station; and
the mobile stations receiving access grant signals from the base station.

2. The method as claimed in claim 1, wherein each mobile ID comprises a preamble signature region, an access slot region, and a random number region.

3. The method as claimed in claim 2, wherein the preamble signature region, access slot region, and random number region are 4-bit, 3-bit and 9-bit, respectively.

4. The method as claimed in claim 1, wherein the mobile ID (ID1; ID2) includes one of a plurality of access slots.

5. The method as claimed in claim 1, further comprising the base station using the mobile ID (ID1; ID2) of the random access signal and then transmitting an access grant signal (AGK) to the mobile station wherein the mobile ID (ID1; ID2) is included in the access grant signal (AGK).

6. Use of a mobile station in a method for generating a mobile ID in a mobile communication system according to claim 1.

## Patentansprüche

1. Verfahren für einen wahlfreien Zugriff in einem mobilen Kommunikationssystem, in dem mehrere mobile Stationen jeweils verschiedene IDs generieren, um einen wahlfreien Zugriff auf eine Basisstation durchzuführen, **gekennzeichnet durch** die folgenden Schritte:
Generieren von verschiedenen Mobil-IDs (ID1; ID2) unter Verwendung von mindestens zwei physikalischen Parametern, die eine von verschiedenen Einleitungssignaturen enthalten, **durch** die mobilen Stationen;
Senden eines Direktzugriffssignal unter Verwendung der erzeugten Mobil-IDs (ID1; ID2) an die Basisstation **durch** die mobilen Stationen; und
Empfangen von Zugriffsgewährungssignalen von der Basisstation **durch** die mobilen Stationen.

2. Verfahren nach Anspruch 1, wobei jede Mobil-ID einen Einleitungssignaturbereich, einen Zugriffszeitfensterbereich und einen Zufallszahlbereich aufweist.

3. Verfahren nach Anspruch 2, wobei der Einleitungssignaturbereich, der Zugriffszeitfensterbereich und der Zufallszahlbereich 4 Bit, 3 Bit bzw. 9 Bit entsprechen.

4. Verfahren nach Anspruch 1, wobei die Mobil-ID (ID1; ID2) eines von mehreren Zugriffszeitfenstern umfasst.

5. Verfahren nach Anspruch 1, das weiterhin umfasst, dass die Basisstation die Mobil-ID (ID1; ID2) des Direktzugriffssignals verwendet und dann ein Zugriffsgewährungssignal (ACK) an die mobile Station sendet, wobei die Mobil-ID (ID1; ID2) in dem Zugriffsgewährungssignal (ACK) enthalten ist.

6. Verwendung einer mobilen Station bei einem Verfahren zum Generieren einer Mobil-ID in einem mobilen Kommunikationssystem gemäß Anspruch 1.

## Revendications

1. Procédé pour un accès aléatoire dans un système de communication mobile, dans lequel une pluralité de stations mobiles génèrent respectivement différentes ID's pour fournir un accès aléatoire à une station de base,
**caractérisé en ce que** le procédé comprend les étapes consistant **en ce que** :
les stations mobiles génèrent différentes ID's mobiles (ID1 ; ID2) utilisant au moins deux paramètres physiques incluant l'une des différentes signatures de préambule ;
les stations mobiles envoient un signal d'accès aléatoire utilisant les ID's mobiles générées (ID1 ; ID2) à la station de base ; et
les stations mobiles reçoivent les signaux d'octroi d'accès provenant de la station de base.

2. Procédé comme revendiqué dans la revendication 1, dans lequel chaque ID mobile comprend une région de signature de préambule, une région d'emplacement d'accès et une région de nombre aléatoire.

3. Procédé comme revendiqué dans la revendication 2, dans lequel la région de signature de préambule, la région d'emplacement d'accès et la région de nombre aléatoire sont de 4 bits, de 3 bits et de 9 bits, respectivement.

4. Procédé comme revendiqué dans la revendication 1, dans lequel l'ID mobile (ID1 ; ID2) inclut l'un d'une pluralité d'emplacements d'accès.

5. Procédé comme revendiqué dans la revendication 1, comprenant, en outre, la station de base qui utilise l'ID mobile (ID1 ; ID2) du signal d'accès aléatoire et qui, ensuite, transmet un signal d'octroi d'accès (SOA) à la station mobile dans lequel l'ID mobile (ID1 ; ID2) est incluse dans le signal d'octroi d'accès (SOA).

6. Utilisation d'une station mobile dans un procédé pour générer une ID mobile dans un système de communication mobile selon la revendication 1.
